# FASCICULE DE BREVET EUROPEEN

(11) **EP 2 071 298 B1**
(45) Date de publication et mention de la délivrance du brevet: **09.04.2014**
(21) Numéro de dépôt: 07301655.2
(22) Date de dépôt: 11.12.2007
(51) Int. Cl.: G01F 15/06, G01D 4/02

(54) **Compteur de fluide avec auto orientation de l'ecran et des informations officielles portées par le couvercle**
Flüssigkeitszähler mit automatischer Bildschirmausrichtung und offiziellen Informationen, die von der Abdeckung übertragen werden
Fluid meter with automatic orientation of the screen and official information displayed on the cover

(43) Date de publication de la demande: 17.06.2009
(73) Titulaire: Actaris SAS, 92100 Boulogne Billancourt (FR)
(72) Inventeur: Cros, Alain, 71680 Crêches sur Saône (FR)
(74) Mandataire: Howson, Richard G.B.

(56) Documents cités:
- EP-A1- 2 058 787
- DE-A1- 3 727 912
- DE-A1- 19 525 685

## Description

L'invention concerne un compteur de fluide, par exemple un compteur d'eau ou un compteur thermique.

Un tel compteur comporte une bâche pourvue d'une conduite d'entrée et d'une conduite de sortie du fluide, une chambre de mesure équipée d'un organe de mesure, par exemple une turbine, et installée dans la bâche et un totalisateur comportant un organe de comptage et d'affichage électronique et recouvert d'un couvercle pourvu d'au moins une fenêtre permettant la visualisation d'un écran à cristal liquide, qui peut indiquer la consommation, des alarmes ou des dates. Ce couvercle peut comporter également une fenêtre permettant l'accès à un bouton poussoir assurant le réveil de cet écran, ainsi que son extinction, dans un but d'économie de l'énergie. Sur la face supérieure du couvercle, sont imprimées des informations officielles, telles que le constructeur, des données techniques et un numéro de série.

Le positionnement relatif de la fenêtre correspondante à l'écran et de ces données officielles est déterminé lors de la fabrication du couvercle du compteur, afin de permettre selon une seule direction de vision, de lire cet écran et ces données.

Lors de l'installation d'un tel compteur sur des canalisations d'arrivée et d'évacuation d'eau, l'agencement et la disposition de ces canalisations n'étant pas maîtrisés, il peut arriver que le montage du compteur avec son couvercle soit tel que écran et informations officielles soient difficilement lisibles ou même illisibles, par exemple qu'un mur empêche l'accès du bon côté pour la lecture, le compteur devant être en quelque sorte monté à l'envers relativement au sens de lecture de l'écran et des données officielles.

Pour résoudre ce problème, il a été réalisé des compteurs dont le totalisateur, ou du moins la partie électronique de ce dernier soit démontable ou pivotable avec le couvercle.

Une telle solution est complexe et coûteuse, car il faut concevoir et fabriquer une telle partie électronique séparable ou mobile, tout en assurant un passage des câbles entre cette partie électronique et la chambre de mesure. Par ailleurs, la liaison mobile doit assurer l'étanchéité entre cette partie électronique et la chambre de mesure remplie d'eau.

Le document de brevet DE 195 25 685 décrit un compteur comportant un totalisateur pourvu d'un organe d'affichage électronique et recouvert d'un couvercle présentant au moins une fenêtre permettant la visualisation d'un écran électronique.

Le document de brevet DE 37 27 912 décrit un compteur comportant un totalisateur pourvu d'un organe d'affichage électronique.

Le document de brevet EP 2 058 787 publié le 13 mai 2009 décrit un compteur comportant un totalisateur pourvu d'un organe d'affichage électronique comportant un écran électronique centré sur l'axe central vertical du compteur, un couvercle recouvrant ledit totalisateur et pivotable autour dudit axe et le compteur comportant au moins un capteur statique sensible au pivotement dudit couvercle, ledit capteur actionnant une commande de l'affichage dudit écran.

L'invention résout ce problème en proposant un compteur de fabrication particulièrement simple et peu coûteuse, qui permet une auto orientation de l'écran et des informations officielles portées par le couvercle, afin d'assurer une lecture aisée de cet écran et de ces informations officielles, quelle que soit la position de montage du compteur.

Pour ce faire, l'invention propose un compteur comportant un totalisateur pourvu d'un organe d'affichage électronique comportant un écran électronique centré sur l'axe central vertical du compteur, un couvercle recouvrant ledit totalisateur et pivotable autour dudit axe et le compteur comportant au moins un capteur statique sensible au pivotement dudit couvercle, ledit capteur actionnant une commande de l'affichage dudit écran, ledit couvercle présente au moins une fenêtre permettant la visualisation dudit écran électronique et porte sur sa face externe des informations officielles, ladite commande étant conçue de sorte que les données affichées par ledit écran soient dans le même sens de lecture que lesdites informations officielles.

Selon un mode de réalisation préféré, le compteur comporte deux capteurs, disposés sous le couvercle sur la face supérieure du totalisateur et diamétralement opposés par rapport audit axe.

De préférence, deux sens de lecture sont considérés, lesdites données affichées par l'écran pouvant l'être dans un premier sens et dans un second sens inversé.

Lesdits capteurs peuvent être des capteurs optiques ou capacitifs et ledit couvercle comporter un orifice disposé en face d'un des capteurs, lorsque l'écran est en vis-à-vis de ladite fenêtre.

Lorsque lesdits capteurs sont capacitifs, le couvercle comporte de préférence, un élément métallique disposé en face des capteurs, lorsque l'écran n'est pas en vis-à-vis de ladite fenêtre.

Avantageusement, lesdits capteurs sont également des boutons d'actionnement manuel de l'affichage dudit écran.

Lesdits boutons peuvent actionner le réveil dudit écran.

Lesdits capteurs peuvent être inductifs ou capacitifs et le couvercle peut comporter un élément métallique disposé en face d'un des capteurs, lorsque l'écran est en vis-à-vis de ladite fenêtre.

L'invention est décrite ci-après plus en détail à l'aide de figures ne représentant que des modes e réalisation préférés de l'invention.
La figure 1 est une vue en perspective d'un compteur conforme à l'invention, dans une première position.
La figure 2 est une vue en perspective du même compteur conforme à l'invention, en cours de réglage.
La figure 3 est une vue en perspective du même compteur conforme à l'invention, dans une seconde position.

Comme illustré sur les figures, un compteur de fluide, en particulier un compteur d'eau ou un compteur thermique, comporte une bâche 1 pourvue d'une conduite d'entrée 1A et d'une conduite de sortie 1B du fluide, une chambre de mesure équipée d'un organe de mesure, par exemple une turbine ou les composants d'une architecture de mesure statique, et installée dans la bâche et un totalisateur comportant un organe de comptage et d'affichage électronique et recouvert d'un couvercle 2 pourvu d'au moins une fenêtre 2A permettant la visualisation d'un écran à cristal liquide 3 centré sur l'axe central vertical X du compteur, qui peut indiquer la consommation, des alarmes ou des dates. Sur la face supérieure et visible du couvercle 2, sont imprimées des informations officielles 4, telles que le constructeur, des données techniques et un numéro de série.

Le couvercle 2 est pivotable autour de l'axe central vertical X du compteur et le compteur comporte au moins un capteur statique sensible au pivotement du couvercle 2, ce capteur actionnant une commande de l'affichage de l'écran 3, de sorte que les données affichées par cet écran soient dans le même sens de lecture que les informations officielles 4.

Selon les modes de réalisation préférés, le compteur comporte deux capteurs, disposés sous le couvercle 2 sur la face supérieure du totalisateur et diamétralement opposés par rapport à l'axe central vertical X du compteur.

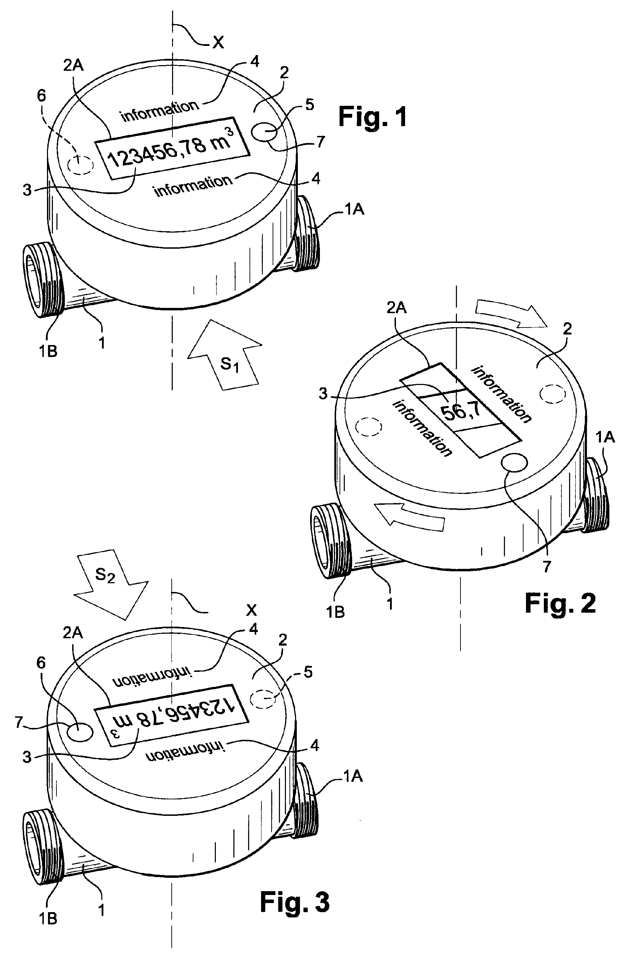

Deux sens de lecture S1, S2 sont considérés, les données affichées par l'écran 3 pouvant l'être dans un premier sens, illustré sur la figure 1, et dans un second sens inversé, illustré sur la figure 3.

Selon un premier mode de réalisation, les capteurs peuvent être des capteurs optiques 5, 6.

Le couvercle comporte alors un orifice 7 disposé en face d'un des capteurs optiques, lorsque l'écran 3 est en vis-à-vis de la fenêtre 2A.

Comme illustré sur la figure 1, un des capteurs optiques 5 est en vis-à-vis de l'orifice 7, l'autre capteur 6 étant sous le couvercle 2. Le premier capteur 5 actionne alors une commande de l'affichage de l'écran 3, de sorte que les données affichées par cet écran soient dans le même sens de lecture S1 que les informations officielles 4.

Si cette position de lecture ne convient pas, le compteur devant être installé dans une position rendant difficile ou impossible la lecture dans ce sens S1, le couvercle 2 est pivoté, comme illustré sur la figure 2. Les deux capteurs optiques 5, 6 sont alors occultés, sous le couvercle 2, jusqu'à positionnement du second capteur optique 6 en vis-à-vis de l'orifice 7, comme illustré sur la figure 3.

Le second capteur 6 actionne alors une commande de l'affichage de l'écran 3, de sorte que les données affichées par cet écran soient inversées et dans le même sens de lecture S2 que les informations officielles 4.

Avantageusement, ces capteurs optiques sont également des boutons d'actionnement manuel de l'affichage de l'écran 3, permettant entre autre d'actionner le réveil et éventuellement l'extinction de l'écran 3.

Selon un second mode de réalisation, les capteurs peuvent être des capteurs capacitifs 5, 6.

Le couvercle comporte alors un orifice 7 disposé en face d'un des capteurs capacitifs, lorsque l'écran 3 est en vis-à-vis de la fenêtre 2A.

Le couvercle comporte un élément métallique disposé en face des capteurs, lorsque l'écran 3 n'est pas en vis-à-vis de la fenêtre 2A. Cet élément métallique peut être un revêtement métallique de la face intérieure du couvercle 2, au moins sur la trajectoire circulaire des capteurs.

Comme illustré sur la figure 1, un des capteurs capacitifs 5 est en vis-à-vis de l'orifice 7, non activé, l'autre capteur 6 étant sous le couvercle 2 et activé par le revêtement métallique. Le premier capteur 5 actionne alors une commande de l'affichage de l'écran 3, de sorte que les données affichées par cet écran soient dans le même sens de lecture S1 que les informations officielles 4.

Si cette position de lecture ne convient pas, le compteur devant être installé dans une position rendant difficile ou impossible la lecture dans ce sens S1, le couvercle 2 est pivoté, comme illustré sur la figure 2. Les deux capteurs capacitifs 5, 6 sont alors activés par le revêtement métallique, sous le couvercle 2, jusqu'à positionnement du second capteur capacitif 6 en vis-à-vis de l'orifice 7, comme illustré sur la figure 3.

Le second capteur 6 actionne alors une commande de l'affichage de l'écran 3, de sorte que les données affichées par cet écran soient inversées et dans le même sens de lecture S2 que les informations officielles 4.

Avantageusement ces capteurs capacitifs sont également des boutons d'actionnement manuel de l'affichage de l'écran 3, permettant entre autre d'actionner le réveil et éventuellement l'extinction de l'écran 3.

Selon un troisième mode de réalisation, les capteurs peuvent être des capteurs inductifs ou capacitifs 5, 6.

Le couvercle comporte alors un élément métallique 7, à la place de l'orifice précédemment décrit, disposé en face d'un des capteurs, lorsque l'écran 3 est en vis-à-vis de la fenêtre 2A.

Comme illustré sur la figure 1, un des capteurs 5 est en vis-à-vis de l'élément métallique 7, activé, l'autre capteur 6 étant sous le couvercle 2 et inactivé. Le premier capteur 5 actionne alors une commande de l'affichage de l'écran 3, de sorte que les données affichées par cet écran soient dans le même sens de lecture S1 que les informations officielles 4.

Si cette position de lecture ne convient pas, le compteur devant être installé dans une position rendant difficile ou impossible la lecture dans ce sens S1, le couvercle 2 est pivoté, comme illustré sur la figure 2. Les deux capteurs 5, 6 sont alors inactivés, sous le couvercle 2, jusqu'à positionnement du second capteur 6 en vis-à-vis de l'élément métallique 7, comme illustré sur la figure 3.

Le second capteur 6 activé actionne alors une commande de l'affichage de l'écran 3, de sorte que les données affichées par cet écran soient inveréses dans le même sens de lecture S2 que les informations officielles 4.

L'invention n'est pas limitée aux modes de réalisation précisément décrits. Tout agencement de capteur(s) statique(s), connu ou à la portée de l'homme du métier, peut être utilisé, afin d'actionner la commande de l'affichage de l'écran 3, de sorte que les données affichées par cet écran 3 soient dans le même sens de lecture que les informations officielles 4.

Par ailleurs, selon le mode de réalisation décrit, le couvercle 2 présente une fenêtre 2A permettant la visualisation d'un écran électronique 3 centré sur l'axe central vertical X du compteur et aligné dans les deux sens de lecture S1 et S2 avec les conduite d'entrée 1A et conduite de sortie 1B de la bâche, elles-mêmes alignées sur un axe.

En variante, toujours avec le principe de l'invention, cet écran peut être disposé selon un angle non nul par rapport à cet axe d'alignement des conduites. Par exemple, il peut être ainsi disposé selon un angle d'environ 45° par rapport à cet axe d'alignement des conduites. Une telle disposition assure une lecture ergonomique, lorsque le compteur est installé sur une canalisation verticale ou horizontale.

## Revendications

1. Compteur comportant un totalisateur pourvu d'un organe d'affichage électronique comportant un écran électronique centré sur l'axe central vertical (X) du compteur, un couvercle (2) recouvrant ledit totalisateur et pivotable autour dudit axe (X) et le compteur comportant au moins un capteur statique (5, 6) sensible au pivotement dudit couvercle (2), ledit capteur actionnant une commande de l'affichage dudit écran (3), ledit couvercle (2) présente au moins une fenêtre (2A) permettant la visualisation dudit écran électronique (3) et porte sur sa face externe des informations officielles (4), ladite commande étant conçue de sorte que les données affichées par ledit écran soient dans le même sens de lecture (S1, S2) que lesdites informations officielles (4).

2. Compteur selon la revendication précédente, dans lequel deux sens de lecture (S1, S2) sont considérés, lesdites données affichées par l'écran (3) pouvant l'être dans un premier sens et dans un second sens inversé.

3. Compteur selon la revendication 1 ou 2, comportant deux capteurs (5, 6), disposés sous le couvercle (2) sur la face supérieure du totalisateur et diamétralement opposés par rapport audit axe (X).

4. Compteur selon la revendication précédente, dans lequel lesdits capteurs (5, 6) sont des capteurs optiques ou capacitifs et en ce que ledit couvercle (2) comporte un orifice (7) disposé en face d'un des capteurs, lorsque l'écran (3) est en vis-à-vis de ladite fenêtre (2A).

5. Compteur selon la revendication précédente, dans lequel lesdits capteurs (5, 6) sont capacitifs et en ce que le couvercle (2) comporte un élément métallique disposé en face des capteurs, lorsque l'écran (3) n'est pas en vis-à-vis de ladite fenêtre (2A).

6. Compteur selon l'une des revendications 3 à 5, dans lequel lesdits capteurs (5, 6) sont également des boutons d'actionnement manuel de l'affichage dudit écran.

7. Compteur selon la revendication précédente, dans lequel lesdits boutons actionnent le réveil dudit écran.

8. Compteur selon la revendication 3, dans lequel lesdits capteurs (5, 6) sont inductifs ou capacitifs et en ce que le couvercle (2) comporte un élément métallique disposé en face d'un des capteurs, lorsque l'écran (3) est en vis-à-vis de ladite fenêtre (2A).

## Patentansprüche

1. Zähler mit einem Zählwerk, welches mit einem elektronischen Anzeigemittel mit einem an der vertikalen Mittelachse (X) des Zählers zentrierten elektronischen Bildschirm versehen ist, wobei ein Deckel (2) das Zählwerk abdeckt und um die Achse (X) schwenkbar ist, und wobei der Zähler mindestens einen statischen Sensor (5, 6) aufweist, der empfindlich für die Schwenkbewegung des Deckels (2) ist und eine Steuerung der Anzeige des Bildschirms (3) betätigt, welcher Deckel (2) mindestens ein Fenster (2A) aufweist, das die Sichtbarmachung des elektronischen Bildschirms (3) gestattet, und an seiner Außenseite amtliche Informationen (4) trägt, wobei die Steuerung so konfiguriert ist, dass die von dem Bildschirm angezeigten Daten in derselben Leserichtung (S1, S2) wie die amtlichen Informationen (4) aufscheinen.

2. Zähler nach dem vorhergehenden Anspruch, bei welchem zwei Leserichtungen (S1, S2) möglich sind, wobei die von dem Bildschirm (3) angezeigten Daten dies in einer ersten Richtung und in einer zweiten, entgegengesetzten Richtung werden können.

3. Zähler nach Anspruch 1 oder 2, mit zwei Sensoren (5, 6), die unter dem Deckel (2) auf der Oberseite des Zählwerks und einander diametral gegenüber relativ zur Achse (X) angeordnet sind.

4. Zähler nach dem vorhergehenden Anspruch, bei welchem die Sensoren (5, 6) optische oder kapazitive Sensoren sind, und der Deckel (2) eine Öffnung (7) aufweist, die gegenüber einem der Sensoren angeordnet ist, wenn sich der Bildschirm (3) gegenüber dem Fenster (2A) befindet.

5. Zähler nach dem vorhergehenden Anspruch, bei welchem die Sensoren (5, 6) kapazitive Sensoren sind, und der Deckel (2) ein metallisches Element aufweist, welches gegenüber den Sensoren angeordnet ist, wenn sich der Bildschirm (3) nicht gegenüber dem Fenster (2A) befindet.

6. Zähler nach einem der Ansprüche 3 bis 5, bei welchem die Sensoren (5, 6) auch Schalter zur manuellen Betätigung der Anzeige des Bildschirms sind.

7. Zähler nach dem vorhergehenden Anspruch, bei welchem die Schalter das Erwachen des Bildschirms betätigt.

8. Zähler nach Anspruch 3, bei welchem die Sensoren (5, 6) induktive oder kapazitive Sensoren sind, und der Deckel (2) ein metallisches Element aufweist, welches gegenüber einem der Sensoren angeordnet ist, wenn sich der Bildschirm (3) gegenüber dem Fenster (2A) befindet.

## Claims

1. Meter including a totaliser provided with an electronic display device including an electronic screen centred on the vertical central axis (X) of the meter, a cover (2) which covers said totaliser and is pivotable about said axis (X), the meter including at least one static sensor (5, 6) which is responsive to the pivoting of said cover (2), said sensor actuating a display command of said screen (3), said cover (2) having at least one window (2A) enabling the viewing of said electronic screen (3) and carrying official information (4) on its external face, said command being designed such that the data displayed by said screen have the same reading direction (S1, S2) as said official information (4).

2. Meter as claimed in the preceding claim, wherein two reading directions (S1, S2) are considered, said data displayed by the screen (3) being capable of being in a first direction or in an opposing second direction.

3. Meter as claimed in Claim 1 or 2, including two sensors (5, 6) disposed below the cover (2) on the upper face of the totaliser and diametrically opposed relative to said axis (X).

4. Meter as claimed in the preceding claimed, wherein said sensors (5, 6) are optical or capacitive sensors, and wherein said cover (2) includes an orifice (7) disposed facing with one of the sensors when the screen (3) is facing said window (2A).

5. Meter as claimed in the preceding claim, wherein said sensors (5, 6) are capacitive, and wherein the cover (2) includes a metal element disposed facing the sensors when the screen (3) is not facing said window (2A).

6. Meter as claimed in one of Claims 3 to 5, wherein said sensors (5, 6) are also buttons for manual actuation of the display of said screen.

7. Meter as claimed in the preceding claim, wherein said buttons wake up said screen.

8. Meter as claimed in Claim 3, wherein said sensors (5, 6) are inductive or capacitive, and wherein the cover (2) includes a metal element disposed facing one of the sensors when the screen (3) is facing said window (2A).
